# EUROPÄISCHE PATENTSCHRIFT

(11) **EP 0 568 948 B1**
(45) Veröffentlichungstag und Bekanntmachung des Hinweises auf die Patenterteilung: **20.09.1995**
(21) Anmeldenummer: 93107124.5
(22) Anmeldetag: 03.05.1993
(51) Int. Cl.: B65H 16/02, F16H 1/16, F16H 57/02

(54) **Vorrichtung zum Abwickeln von Bahnen**
Device for unwinding webs
Dispositif pour dérouler des bandes

(30) Priorität: 06.05.1992 DE 4214973
(43) Veröffentlichungstag der Anmeldung: 10.11.1993
(73) Patentinhaber: M.A.N.-ROLAND Druckmaschinen Aktiengesellschaft, 63012 Offenbach (DE)
(72) Erfinder: Seyffert, Ulrich, O-9906 Syrau (DE); Kreisig, Hans-Joachim, O-9900 Plauen (DE); Herold, Gottfried, O-6601 Cossengrün (DE)

(56) Entgegenhaltungen:
- FR-A- 1 188 876
- US-A- 1 967 648
- PATENT ABSTRACTS OF JAPAN vol. 8, no. 132 (M-303)20. Juni 1984 & JP-A-59 034 069 (FUJIKOSHI K.K.) 24 Februar 1984

## Beschreibung

Die Erfindung betrifft eine Vorrichtung zum Abwickeln von Bahnen nach dem Oberbegriff des Patentanspruches 1.

Es sind Vorrichtungen bekannt (z. B. US-A-1,967,648), bei denen zum Verschwenken des Mehrfachwickelrollenträgers auf dessen im Maschinengestell gelagerten Antriebswelle das Schneckenrad eines am Maschinengestell befestigten, mittels Elektromotor angetriebenen Schneckentriebes fest angeordnet ist.

Der Nachteil dieser Vorrichtungen ist, daß entweder alle Teile des Schneckentriebes in einem gesonderten Gehäuse zusammengefaßt sind, das nach entsprechender Justierung am Maschinengestell befestigt wird, oder einzelne Teile des Schneckentriebes nach ihrer gegenseitigen Justage getrennt voneinander am Maschinengestell oder anderen Maschinenteilen befestigt werden.

In beiden Fällen ist der Aufwand für die Lagerung der Teile und ihre Montage relativ hoch.

Ein weiterer Nachteil ist, daß entstehende Lagerkräfte durch entsprechend dimensionierte Lagerstellen einzeln kompensiert werden müssen und als Reaktionskräfte nach außen auf angrenzende Bauteile als zusätzliche Belastung wirken.

Der Erfindung liegt die Aufgabe zugrunde, eine Vorrichtung zum Abwickeln von Bahnen gemäß dem Oberbegriff von Anspruch 1 derart zu gestalten, daß mit geringem technischen Aufwand eine geschlossen auswechselbare, die Lagerkräfte seiner Bauteile weitestgehend kompensierende, wenig Raum erfordernde Baugruppe entsteht.

Diese Aufgabe wird durch die kennzeichnenden Merkmale von Anspruch 1 gelöst. Dadurch entsteht eine einfache, mit geringem Aufwand komplett austauschbare, in sich geschlossene Baugruppe. Entstehende Lagerkräfte werden unmittelbar an, Entstehungsort unter Einbeziehung weniger Bauelemente durch die Gleitstücke und die über die Lagerschilde fest miteinander verspannten Halter abgefangen. Die schwimmende Lagerung der Halter auf der Nabe des Schneckenrades ermöglicht ein einfaches Ausrichten der Schnecke gegenüber dem Schneckenrad über die Gleitstücke.

In den Unteransprüchen sind vorteilhafte Ausgestaltungen des Erfindungsgegenstandes wiedergegeben, die ohne großen technischen Aufwand vorzunehmen sind.

So ermöglicht die Verwendung von Flachstahl für die Halter und die Lagerschilde den Verzicht auf eine flächige Bearbeitung dieser Bauelemente.

Der als Verdrehsicherung verwendete gabelförmige, in einen Zapfen eines Lagerschildes eingreifende Arretierkörper ermöglicht in sehr einfacher Weise eine Fixierung des die Schnecke beinhaltenden Gehäuses gegenüber dem Maschinengestell und ein schnelles, einfaches Auswechseln der kompletten Baugruppe.

Der Einsatz eines Paßstiftes und eines Exzenterbolzens ermöglicht unter Ausnutzung des Bewegungsspielraumes der Lagerschilde gegenüber den Schrauben mit minimalem Aufwand die Einstellung des Spieles zwischen Schnecke und Schneckenrad, wobei Paßstift und Exzenterbolzen bei entsprechender Ausstattung mit Gewinde als Befestigungselement mit benutzt werden können.

Letztlich gestattet die Verwendung eines unmittelbar mit der Schnecke verbundenen Flanschmotors eine effektive Antriebsgestaltung.

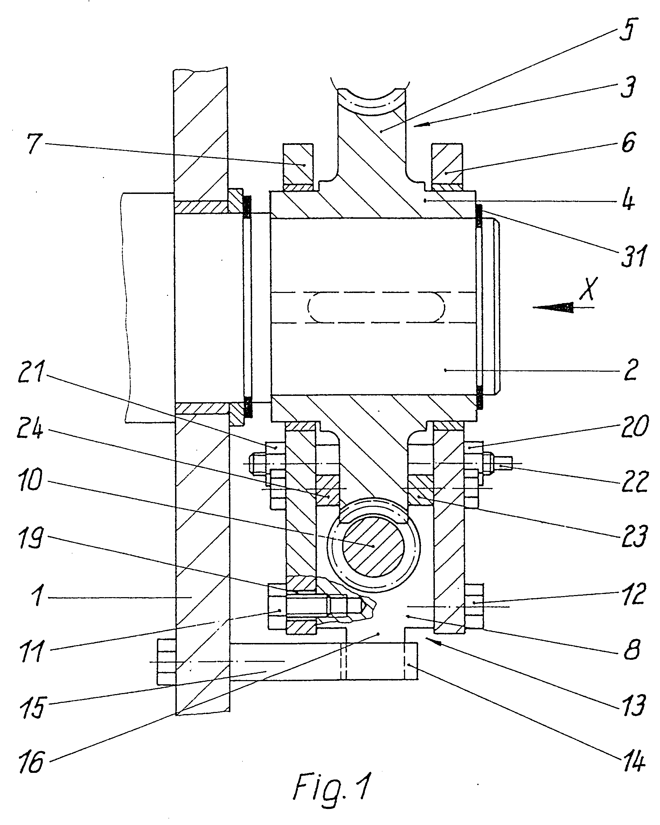

Die Erfindung soll nachfolgend an einem Ausführungsbeispiel näher erläutert werden. In den zugehörigen Zeichnungen zeigen:
- Fig. 1:: die erfindungsgemäße Vorrichtung gemäß Schnitt A-A von Fig. 2
- Fig. 2:: die erfindungsgemäße Vorrichtung in der Seitenansicht gemäß Blickrichtung X von Fig. 1
Wie aus Fig. 1 zu entnehmen, sitzt auf der in dem Maschinengestell 1 gelagerten Antriebswelle 2 für den nicht dargestellten, in verschiedene Arbeitsstationen schwenkbaren Mehrfachwickelrollenträger ein gegen Verdrehung und axiale Verschiebung gesichertes Schneckenrad 3, auf dessen Nabe 4 beiderseitig des Radkranzes 5 jeweils ein Halter 6; 7 schwimmend gelagert ist. Die Halter 6; 7 sind an beiden Stirnseiten über jeweils ein Lagerschild 8; 9 zur Lagerung einer den Schneckentrieb komplettierenden Schnecke durch Schrauben 11; 12 zu einem Gehäuse 13 verbunden, das durch einen in eine gabelförmige Aussparung 14 eines am Maschinengestell 1 befestigten Arretierkörpers 15 eingreifenden, an einem der Lagerschilde 8 angeordneten Zapfen 16 gegen Verdrehung gesichert ist.

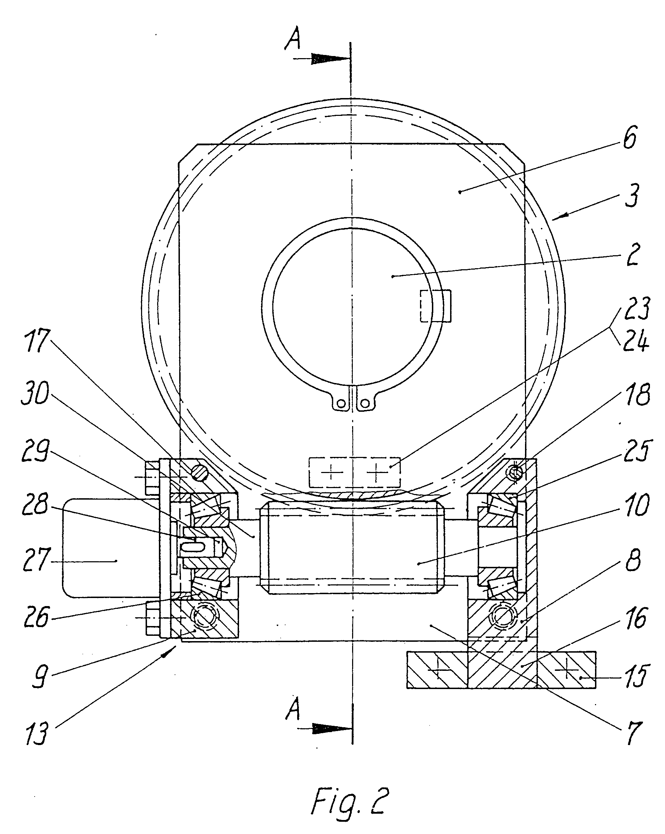

In dem einen Lagerschild 9 ist ein Paßbolzen 17 und in dem anderen Lagerschild 8 ein Exzenterbolzen 18 jeweils in axialer Richtung des Schneckenrades 3 angeordnet (Fig. 2). Auf Grund des jeweils radialen Spieles zwischen den Durchgangsbohrungen 19 in den Haltern 6; 7 gegenüber den sie durchsetzenden Schrauben 11; 12 ist im ausreichenden Maße über eine Verdrehung des Exzenterbolzens 18 ein Verschwenken der Schnecke 10 um den Paßbolzen 17 zwecks Einstellung des Zahnspieles zwischen letzterer und dem Schneckenrad 3 möglich.

Zur zusätzlichen Nutzung von Paßbolzen 17 und Exzenterbolzen 18 für die Befestigung der Halter 6; 7 sind diese jeweils an beiden Enden mit die Halter 6; 7 seitlich überragendem Gewinde für eine die Verspannung der Teile bewirkende Mutter 20; 21 ausgestattet.

Der Exzenterbolzen 18 trägt zusätzlich an einem Ende ein seine Verdrehung durch ein aufsteckbares Werkzeug ermöglichendes Formelement 22.

Wie in Fig. 1 zu entnehmen, stützen sich die Halter 6; 7 für die Schnecke 10 jeweils über ein an ihnen befestigtes Gleitstück 23; 24 seitlich am Schneckenrad 3 ab, so daß einerseits keine Kräfte außerhalb dieses in sich geschlossenen Systems wirksam und andererseits die Halter 6; 7 schwimmend als Loslager auf der Nabe 4 des Schneckenrades 3 gelagert werden können.

Fig. 2 zeigt die Lagerung der Schnecke 10 im jeweiligen Lagerschild 8; 9 über je ein Kegelrollenlager 25; 26.

Als Antrieb für die Schwenkbewegung des Mehrfachwickelrollenträgers ist an einem Lagerschild 9 ein Elektromotor 27 angeflanscht, dessen Antriebszapfen 28 über eine Paßfederverbindung formschlüssig in eine koaxiale Bohrung 29 der Schneckenwelle 30 eingreift.

Der komplett vormontierte Schneckentrieb läßt sich problemlos durch Aufstecken des Schneckenrades 3 auf die Antriebswelle 2 des Mehrfachwickelrollenträgers unter gleichzeitigem Ineingriffbringen des Zapfens 16 in die gabelförmige Aussparung 14 des am Maschinengestell 1 befestigten Arretierkörpers 15 montieren und durch einen Sicherungsring 31 auf der Antriebswelle 2 sichern.

## Patentansprüche

1. Vorrichtung zum Abwickeln von Bahnen mit einen in verschiedene Arbeitsstationen schwenkbaren, im Maschinengestell (1) gelagerten Mehrfachwickelrollenträger, auf dessen Antriebswelle (2) das Schneckenrad (3) eines mit dem Maschinengestell (1) verbundenen Schneckentriebes befestigt ist, gekennzeichnet dadurch, daß auf der Nabe (4) des Schneckenrades (3) beiderseitig zu dessen Radkranz (5) je ein Halter (6; 7) drehbar gelagert ist, die Halter (6; 7) mit zwei Lagerschilden (8; 9) für die Schnecke (10) ein Gehäuse (13) bildend fest, jedoch lösbar verbunden sind sowie sich jeweils seitlich am Schneckenrad (3) über Gleitstücke (23; 24) abstützen, und das Gehäuse (13) mit einer Verdrehsicherung gegenüber dem Maschinengestell (1) ausgestattet ist.

2. Vorrichtung nach Anspruch 1, gekennzeichnet dadurch, daß die Halter (6; 7) und Lagerschilde (8; 9) aus Flachstahl bestehen.

3. Vorrichtung nach Anspruch 1, gekennzeichnet dadurch, daß die Verdrehsicherung aus einem Arretierkörper (15) mit einer Aussparung (14) und einem in letztere eingreifenden Formstück besteht, wobei der Arretierkörper am Maschinengestell (1) und das Formstück am Gehäuse (13) wechselweise befestigt sind.

4. Vorrichtung nach Anspruch 3, gekennzeichnet dadurch, daß die Aussparung (14) des am Maschinengestell (1) befestigten Arretierkörpers (15) gabelförmig ausgebildet ist und das zugehörige Formstück aus einem an einem Lagerschild (8) angeordneten Zapfen (16) besteht.

5. Vorrichtung nach Anspruch 1, gekennzeichnet dadurch, daß die Lagerschilde (8; 9) durch jeweils eine Durchgangsbohrung (19) in den Haltern (6; 7) radial spielbehaftet durchsetzende Schrauben (11; 12) und zusätzlich ein Lagerschild (9) durch einen Paßbolzen (17) und ein Lagerschild (8) durch einen Exzenterbolzen (18) eine Justierung der Schnecke (10) zum Schneckenrad (3) durch Verschenken ermöglichend mit den Haltern (6; 7) verbunden sind.

6. Vorrichtung nach Anspruch 5, gekennzeichnet dadurch, daß der Paßbolzen (17) und der Exzenterbolzen (18) jeweils an beiden Enden mit die Halter (6; 7) seitlich überragendem, deren gegenseitige Verspannung durch je eine Mutter (20; 21) dienendem Gewinde ausgestattet sind.

7. Vorrichtung nach Anspruch 5, gekennzeichnet dadurch, daß der Exzenterbolzen (18) ein das Ansetzen eines Werkzeuges ermöglichendes Formelement (22) besitzt.

8. Vorrichtung nach Anspruch 1, gekennzeichnet dadurch, daß an einem Lagerschild (9) ein Elektromotor (27) angeflanscht ist, dessen Antriebszapfen (28) formschlüssig, koaxial mit der Schneckenwelle (30) verbunden ist.

## Claims

1. Device for unwinding webs having a multiple winding reel carrier pivotable into various work stations and mounted in the machine frame (1), on the drive shaft (2) of which reel carrier there is secured the worm wheel (3) of a worm drive connected to the machine frame (1), characterised in that on the hub (4) of the worm wheel (3) on each side of its wheel rim (5) there is rotatably mounted a holder (6; 7), the holders (6; 7) are firmly but releasably connected to two bearing brackets (8; 9) for the worm (10) forming a housing (13) and are respectively supported laterally on the worm wheel (3) by means of sliding contacts (23; 24), and the housing (13) is provided with means for securing against rotation with respect to the machine frame (1).

2. Device according to claim 1, characterised in that the holders (6; 7) and bearing brackets (8; 9) are made of flat-bar steel.

3. Device according to claim 1, characterised in that the means for securing against rotation comprises an arresting body (15) having a recess (14) and a moulded piece engaging in the latter, the arresting body being secured on the machine frame (1) and the moulded piece on the housing (13) in their turns.

4. Device according to claim 3, characterised in that the recess (14) of the arresting body (15) secured on the machine frame (1) is of fork-shaped construction and the associated moulded piece comprises a journal (16) arranged on one bearing bracket (8).

5. Device according to claim 1, characterised in that the bearing brackets (8; 9) are joined by screws (11; 12) respectively penetrating a through-bore (19) in the holders (6; 7) with radial clearance, and in addition one bearing bracket (9) is joined by a fitted pin (17) and one bearing bracket (8) by an eccentric pin (18) to the holders (6; 7), making adjustment of the worm (10) with respect to the worm wheel (3) possible by pivoting.

6. Device according to claim 5, characterised in that the fitted pin (17) and the eccentric pin (18) are each provided at both ends with a thread laterally protruding beyond the holders (6; 7), for clamping the holders against each other by means of a nut (20; 21).

7. Device according to claim 5, characterised in that the eccentric pin (18) has a shaped element (22) making possible the placing of a tool.

8. Device according to claim 1, characterised in that flanged on one bearing bracket (9) is an electric motor (27) the drive pin (28) of which is connected in a positive-locking manner coaxially to the worm-gear shaft (30).

## Revendications

1. Dispositif pour dérouler des bandes par un support de bobineuse multiple logé dans un bâti de machine (1) pivotant dans différentes positions de travail, sur l'arbre d'entraînement (2) duquel est fixée la roue à vis sans fin (3) d'un engrenage à vis sans fin connecté au bâti de la machine (1), caractérisé en ce qu'un support respectivement (6; 7) est monté de manière tournante sur le moyeu (4) de la roue à vis sans fin (3) de part et d'autre de la couronne de roue (5) de celle-ci, les supports (6; 7) sont connectés de manière solide, toutefois amovible à un carter (13) par deux flasques (8; 9) destinés à la vis sans fin (10) de sorte qu'ils s'appuient respectivement de manière latérale à la roue à vis sans fin (3) par des pièces de glissement (23; 24) et en ce que le carter (13) est équipé d'un dispositif de garantie de torsion par rapport au bâti de la machine (1).

2. Dispositif selon la revendication 1, caractérisé en ce que les supports (6; 7) et les flasques (8; 9) se composent d'acier plat.

3. Dispositif selon la revendication 1, caractérisé en ce que la garantie de torsion se compose d'un corps d'arrêt (15) avec un évidement (14) et d'une pièce de forme se mettant en prise dans ce dernier, le corps d'arrêt et la pièce de forme étant fixés au bâti de la machine (1) et au carter (13) de manière à pouvoir être remplacés.

4. Dispositif selon la revendication 3, caractérisé en ce que l'évidement (14) du corps d'arrêt (15) fixé au bâti de la machine (1) est réalisé en forme de fourche et en ce que la pièce de forme annexée se compose d'un tenon (16) placé au niveau d'un flasque (8).

5. Dispositif selon la revendication 1, caractérisé en ce que les flasques (8; 9) sont connectés aux supports (6; 7) par des vis (11; 12) traversant avec un jeu radial respectivement un alésage de passage (19) dans les supports (6; 7) et en outre sont reliés aux supports (6; 7) un flasque (9) par un goujon lisse (17) et un flasque (8) par un goujon d'excentrique (18) de manière à rendre possible un réglage par pivotement de la vis sans fin (10) par rapport à la roue à vis sans fin (3).

6. Dispositif selon la revendication 5, caractérisé en ce que le goujon lisse (17) et le goujon d'excentrique (18) sont équipés respectivement aux deux extrémités d'un filetage dépassant latéralement des supports (6; 7) servant à la déformation mutuelle de ceux-ci par un écrou respectif (20; 21).

7. Dispositif selon la revendication 5, caractérisé en ce que le goujon d'excentrique (18) possède un élément de forme (22) facilitant la mise en place d'un outil.

8. Dispositif selon la revendication 1, caractérisé en ce qu'un moteur électrique (27) est fixé par bride à un flasque (9), dont la broche d'entraînement (28) est reliée par une forme appropriée, coaxialement à l'arbre (30) de la vis sans fin.
